# EUROPÄISCHE PATENTSCHRIFT

(11) **EP 2 432 907 B1**
(45) Veröffentlichungstag und Bekanntmachung des Hinweises auf die Patenterteilung: **25.02.2015**
(21) Anmeldenummer: 10724251.3
(22) Anmeldetag: 29.04.2010
(51) Int. Cl.: C22C 38/40, C01B 3/00, C21D 8/02

(54) **METALLFOLIE**
METAL FOIL
FEUILLE MÉTALLIQUE

(30) Priorität: 20.05.2009 DE 102009022203
(43) Veröffentlichungstag der Anmeldung: 28.03.2012
(73) Patentinhaber: VDM Metals GmbH, 58791 Werdohl (DE)
(72) Erfinder: BEHRENS, Rainer, 58644 Iserlohn (DE)
(86) Internationale Anmeldenummer: PCT/DE2010/000490
(87) Internationale Veröffentlichungsnummer: WO 2010/133197

(56) Entgegenhaltungen:
- EP-A1- 0 492 698
- EP-A1- 1 366 811
- DE-A1- 3 535 395
- DE-A1- 10 128 132
- DE-A1-102005 040 255
- US-A- 4 169 030
- US-A- 4 394 293
- LEE K ET AL: "Photocatalytic water-splitting in alkaline solution using redox mediator. 1:Parameter study" INTERNATIONAL JOURNAL OF HYDROGEN ENERGY, ELSEVIER SCIENCE PUBLISHERS B.V., BARKING, GB LNKD- DOI:10.1016/J.IJHYDENE.2004.01.003, Bd. 29, Nr. 13, 1. Oktober 2004 (2004-10-01), Seiten 1343-1347, XP004521297 ISSN: 0360-3199

## Beschreibung

Die Erfindung betrifft eine Metallfolie für die katalytische Herstellung von Wasserstoff.

Es ist allgemein bekannt, durch die Kombination aus einer Solarzelle, in welcher ein elektrischer Strom erzeugt wird und einer Elektrolysezelle, in welcher mittels diesen elektrischen Stromes Wasser in Wasserstoff und Sauerstoff zerlegt wird, Wasserstoff und Sauerstoff zu erzeugen, welche dann gespeichert und bei Bedarf in einer Brennstoffzelle erneut in elektrische Energie umgewandelt werden können. Dieses Gemisch aus Wasserstoff und Sauerstoff - das so genannte Knallgas - ist hoch explosiv. Der Umgang mit diesem Gemisch stellt hohe sicherheitstechnische Anforderungen. Darüber hinaus ist der technische Aufwand erheblich.

Die DE 35 35 395 betrifft die Erzeugung von Wasserstoffgas, wobei man einen feinteiligen metallischen Katalysator mit Wasser, welches einen Chelatbildner enthält, bei einer Temperatur zwischen 60 und 150° C kontaktiert. Der feinteilige metallische Katalysator wird aus der Gruppe Nickel, Kobalt, Eisen, Palladium, Platin, Kupfer, Magnesium, Mangan ausgewählt. Bevorzugt soll der metallische Katalysator hauptsächlich aus Nickel oder Legierungen daraus bestehen.

Ziel des Erfindungsgegenstandes ist es, eine Metallfolie für die katalytische Herstellung von Wasserstoff aus einer vorgebbaren Legierung bereit zu stellen.

Darüber hinaus soll ein Verfahren zur Herstellung einer derartigen Metallfolie vorgeschlagen werden.

Schließlich soll die Metallfolie selber für spezielle Anwendungsfälle geeignet sein.

Dieses Ziel wird erreicht durch eine Metallfolie für die katalytische Herstellung von Wasserstoff mit folgender chemischer Zusammensetzung (in Gew.-%):

| | |
|---|---|
| C | 0,001 bis 0,5 % |
| S | max. 0,008 % |
| N | 0,1 bis 0,3 % |
| Cr | 24 bis 28 % |
| Ni | 30 bis 33 % |
| Mn | 1,0 bis 2,0 % |
| Si | 0,005 bis 0,2 % |
| Mo | 6,0 bis 7,5 % |
| Ti | max. 0,05 % |
| Nb | max. 0,05 % |
| Cu | 0,8 bis 2,0 % |
| P | max. 0,025 % |
| Al | max. 0,2 % |
| Cer MM | 0,01 bis 0,1 % |
| W | max. 0,5 % |
| Co | max. 0,5 % |
| B | 0,001 bis 0,05 % |
| Fe | Rest |

und herstellungsbedingte Verunreinigungen.

Vorteilhafte Weiterbildungen der erfindungsgemäßen Metallfolie sind den zugehörigen Unteransprüchen zu entnehmen.

Dieses Ziel wird auch erreicht durch ein Verfahren zur Herstellung einer Metallfolie aus den vorab beschriebenen chemischen Zusammensetzungen, die durch mechanische Kalt- und/oder Warmformgebung eines Halbzeuges gegebenenfalls mit mindestens einer Wärme-/Glühbehandlung an Enddicke < 1,0 mm gebracht wird.

Einem weiteren Gedanken der Erfindung gemäß wird die mechanische Formgebung durch Walzen, bedarfsweise mit ein- oder mehrfacher Glühung durchgeführt. Zum Einsatz gelangen, insbesondere gegen Ende des Walzvorgangs, Hartmetallwalzen, die vorteilhafterweise mit einer maximalen Rauhigkeit von 0,5 µm versehen sind.

Weiterhin vorteilhaft ist, wenn die Folien vor dem jeweiligen Glühvorgang mit einer Elektrolytbeize entfettet werden.

Besonders vorteilhaft ist es, im Verlauf des Walzvorgangs an Enddicke < 1,0 mm Walzöl bestimmter chemischer Zusammensetzung einzusetzen, wobei dann am Ende des Abschlusswalzvorgangs auf der Folienoberfläche ein Walzölfilm vorgebbarer Filmdicke verbleibt.

Dieses so vorbereitete folienartige Halbzeug wird nun einer nachstehend beschriebenen besonderen thermischen Behandlung zur Erzeugung einer Oxidschicht vorgebbarer Schichtdicke auf der Folienoberfläche unterzogen. Durch diese Maßnahme können definierte Spinellstrukturen auf der Folienoberfläche generiert werden.

Die Metallfolie wird im Anschluss an die mechanische Formgebung für eine Zeit von 5 bis 60 Minuten bei einer Temperatur von 500 bis 1.000° C unter sauerstoffhaltiger Atmosphäre thermisch behandelt.

Von besonderem Vorteil ist, wenn die Metallfolie in einem Muffelofen in einer Zeit von 5 bis 40 Minuten bei einer Temperatur von 550 bis 950° C unter sauerstoffhaltiger Atmosphäre thermisch behandelt wird.

Derartige Metallfolien können bevorzugt als Vollmetallkatalysatoren für die Herstellung von Wasserstoff aus einer wässrigen Lösung in Wirkverbindung mit einer Lichtquelle eingesetzt werden.

Als wirksame und preiswerte Lichtquelle soll hierbei das Sonnenlicht verwendet werden.

Wasser ist das verbreitetste Lösungsmittel, das als wässrige Lösung bekannt ist. Hier ist neben Trinkwasser auch Salzwasser angesprochen.

Darüber hinaus sind jedoch Säuren und Basen auch als wässrige Lösung anzusehen und für die Erzeugung von Wasserstoff verwendbar.

Die Metallfolien werden vorteilhafter Weise an Enddecken zwischen 0,01 bis 1,0 mm mechanisch umgeformt, wobei die angesprochenen Wärme- und/oder Glühbehandlungen durchgeführt werden können.

In der folgenden Tabelle sind zwei erfindungsgemäße Legierungszusammensetzungen wiedergegeben.

| **Legierungselement** | **Legierung 1 (Gew.-%)** | **Legierung 2** (**Gew**.-**%**) |
|---|---|---|
| **C** | 0,01 % | 0,075 % |
| **N** | 0,16 % | 0,22 % |
| **Cr** | 26,80 % | 27,10 % |
| **Ni** | 31,20 % | 31,50 % |
| **Mn** | 1,48 % | 1,50 % |
| **Si** | 0,08 % | 0,09 % |
| **Mo** | 6,5 % | 6,6 % |
| **Cu** | 1,23 % | 1,18 % |
| **Cer MM** | 0,04 % | 0,05 % |
| **B** | 0,003 % | 0,005 % |
| **Fe** | Rest | Rest |

Die weiteren in den Ansprüchen angegebenen Elemente liegen entweder nur in Spuren vor oder zählen zu den herstellungsbedingten Verunreinigungen.

Für einen Versuch wurden nach dem erfindungsgemäßen Kalt- und Warmformgebungsverfahren insbesondere durch Walzen erzeugte Metallfolien der Stärke 0,02 mm aus den obigen Legierungen eingesetzt. Die Metallfolien wurden für 8 Minuten in einem Muffelofen bei 800° C unter sauerstoffhaltiger Atmosphäre einer thermischen Behandlung unterzogen. Durch diese Maßnahme konnte eine Oxidschicht definierter Schichtdicke auf der Folienoberfläche erzeugt werden, die die Folie dann in Wirkverbindung mit einer wässrigen Lösung sowie einer Lichtquelle für die Erzeugung von Wasserstoff einsetzbar macht.

4 cm² bzw. 0,282 g dieser als Katalysator einsetzbaren Metallfolien wurden anschließend in ein 100 ml-Becherglas eingesetzt. Hierzu wurden 65 g Trinkwasser als Lösungsmittel gegeben und das den Vollmetallkatalysator enthaltende Becherglas dem Sonnenlicht ausgesetzt. An der Katalysatorfolie setzte eine sichtbare Bildung von Gasbläschen ein.

## Patentansprüche

1. Metallfolie für die katalytische Herstellung von Wasserstoff, mit folgender chemischer Zusammensetzung (in Gew.-%)
| | |
|---|---|
| C | 0,001 bis 0,5 % |
| S | max. 0,008 % |
| N | 0,1 bis 0,3 % |
| Cr | 24 bis 28 % |
| Ni | 30 bis 33 % |
| Mn | 1,0 bis 2,0 % |
| Si | 0,005 bis 0,2 % |
| Mo | 6,0 bis 7,5 % |
| Ti | max. 0,05 % |
| Nb | max. 0,05 % |
| Cu | 0,8 bis 2,0 % |
| P | max. 0,025 % |
| Al | max. 0,2 % |
| Cer MM | 0,01 bis 0,1 % |
| W | max. 0,5 % |
| Co | max. 0,5 % |
| B | 0,001 bis 0,05 % |
| Fe | Rest |
und herstellungsbedingte Verunreinigungen.

2. Metallfolie nach Anspruch 1, mit folgender chemischer Zusammensetzung (in Gew.-%)
| | |
|---|---|
| C | 0,001 bis 0,02 % |
| S | max. 0,005 % |
| N | 0,15 bis 0,25 % |
| Cr | 26 bis 27,5 % |
| Ni | 31 bis 32 % |
| Mn | 1,2 bis < 2,0 % |
| Si | 0,01 bis < 0,1 % |
| Mo | 6,0 bis 7,0 % |
| Ti | max. 0,05 % |
| Nb | max. 0,05 % |
| Cu | 1,0 bis < 2,0 % |
| P | max. 0,02 % |
| Al | max. 0,15 % |
| Cer MM | 0,02 bis < 0,1 % |
| W | max. 0,3 % |
| Co | max. 0,5 % |
| B | 0,001 bis 0,01 % |
| Fe | Rest |
und herstellungsbedingte Verunreinigungen.

3. Verfahren zur Herstellung einer Metallfolie nach Anspruch 1 oder 2, die durch mechanische Kalt- und/oder Wamformgebung eines Halbzeuges, gegebenenfalls mit mindestens einer Wärme-/Glühbehandlung an Enddicke < 1,0 mm gebracht wird.

4. Verfahren nach Anspruch 3, **dadurch gekennzeichnet, dass** für die mechanische Formgebung zur Erzeugung von Folien < 1,0 mm Walzen, insbesondere Hartmetallwalzen, eingesetzt werden.

5. Verfahren nach Anspruch 3 oder 4, **dadurch gekennzeichnet, dass** für das Walzen zu Folien an Enddicken < 1,0 mm Hartmetallwalzen mit einer Rauhigkeit Ra < 0,5 µm eingesetzt werden.

6. Verfahren nach einem der Ansprüche 3 bis 5, **dadurch gekennzeichnet, dass** die Folien vor einem Glühvorgang mit einer Elektrolytbeize entfettet werden.

7. Verfahren nach einem der Ansprüche 3 bis 6, **dadurch gekennzeichnet**, im Verlauf des Walzvorgangs an Enddicke < 1,0 mm Walzöl eingesetzt wird, wobei am Ende des Walzens auf der Folienoberfläche ein Film an Walzöl vorgebbarer Dicke verbleibt.

8. Verfahren nach einem der Ansprüche 3 bis 7, **dadurch gekennzeichnet, dass** die Folie im Anschluss an die mechanische Formgebung für eine Zeit von 5 bis 60 Minuten bei einer Temperatur von 500 bis 1.000° C unter sauerstoffhaltiger Atmosphäre thermisch behandelt wird.

9. Verfahren nach einem der Ansprüche 3 bis 8, **dadurch gekennzeichnet, dass** die Metallfolie in einem Muffelofen in einer Zeit von 5 bis 40 Minuten bei einer Temperatur von 550 bis 950° C unter sauerstoffhaltiger Atmosphäre thermisch behandelt wird.

10. Verfahren nach einem der Ansprüche 3 bis 9, **dadurch gekennzeichnet, dass** in Abhängigkeit der Foliendicke und der Art der thermischen Behandlung eine Oxidschicht definierter Schichtdicke auf der Folienoberfläche einstellbar ist.

11. Verwendung einer Metallfolie nach einem der Ansprüche 1 bis 10, als Vollmetallkatalysator für die Herstellung von Wasserstoff aus einer wässrigen Lösung in Wirkverbindung mit einer Lichtquelle.

12. Verwendung einer Metallfolie nach einem der Ansprüche 1 bis 11 als Vollmetallkatalysator für die Herstellung von Wasserstoff aus einer wässrigen Lösung in Wirkverbindung mit dem Sonnenlicht.

## Claims

1. A metal foil for the catalytic production of hydrogen, comprising the following chemical composition (in % by mass)
| | |
|---|---|
| C | 0.001 to 0.5 % |
| S | max. 0.008 % |
| N | 0.1 to 0.3 % |
| Cr | 24 to 28 % |
| Ni | 30 to 33 % |
| Mn | 1.0 to 2.0 % |
| Si | 0.005 to 0.2 % |
| Mo | 6.0 to 7.5 % |
| Ti | max. 0.05 % |
| Nb | max. 0.05 % |
| Cu | 0.8 to 2.0 % |
| P | max. 0.025 % |
| Al | max. 0.2 % |
| cerium MM | 0.01 to 0.1 % |
| W | max. 0.5 % |
| Co | max. 0.5 % |
| B | 0.001 to 0.05 % |
| Fe | rest |
and production dependent impurities.

2. A metal foil according to claim 1, comprising the following chemical composition (in % by mass)
| | |
|---|---|
| C | 0.001 to 0.02 % |
| S | max. 0.005 % |
| N | 0.15 to 0.25 % |
| Cr | 26 to 27.5 % |
| Ni | 31 to 32 % |
| Mn | 1.2 to <2.0 % |
| Si | 0.01 to < 0.1 % |
| Mo | 6.0 to 7.0 % |
| Ti | max. 0.05 % |
| Nb | max. 0.05 % |
| Cu | 1.0 to < 2.0 % |
| P | max. 0.02 % |
| Al | max. 0.15 % |
| cerium MM | 0.02 to < 0.1 % |
| W | max. 0.3 % |
| Co | max. 0.5 % |
| B | 0.001 to 0.01 % |
| Fe | rest |
and production dependent impurities.

3. A method for the manufacture of a metal foil according to claim 1 or 2 which is brought to an end thickness of < 1.0 mm by mechanical cold and/or hot forming of a semi-finished product, if need be, by means of at least one heat/annealing treatment.

4. A method according to claim 3, **characterized in that** rollers, in particular carbide rolls, are used for the mechanical forming for manufacturing foils of < 1.0 mm.

5. A method according to claim 3 or 4, **characterized in that** carbide rolls having a roughness Ra of < 0.5 µm are used for rolling foils having end thicknesses of < 0.1 mm.

6. A method according to one of the claims 3 through 5, **characterized in that** the foils will be degreased with an electrolyte mordant before an annealing treatment.

7. A method according to one of the claims 3 through 6, **characterized in that** rolling oil will be used in the course of the rolling operation for reaching the end thickness of < 1.0 mm, wherein a film of rolling oil having a pre-determinable thickness will remain on the foil surface at the end of the rolling operation.

8. A method according to one of the claims 3 through 7, **characterized in that** after the mechanical forming, the foil will be thermally treated at a temperature comprised between 500 and 1000°C in an atmosphere containing oxygen during a period of 5 to 60 minutes.

9. A method according to one of the claims 3 through 8, **characterized in that** the metal foil will be thermally treated in a muffle furnace at a temperature comprised between 550 and 950°C in an atmosphere containing oxygen during a period of 5 to 40 minutes.

10. A method according to one of the claims 3 through 9, **characterized in that** in dependence on the foil thickness and the thermal treatment type, an oxide layer having a defined layer thickness can be obtained on the foil surface.

11. A use of a metal foil according to one of the claims 1 through 10 as a full metal catalyst for the production of hydrogen from an aqueous solution in connection with a light source.

12. A use of a metal foil according to one of the claims 1 through 11 as a full metal catalyst for the production of hydrogen from an aqueous solution in connection with the sun light.

## Revendications

1. Feuille métallique destinée à la production catalytique d'hydrogène, comprenant la composition chimique suivante (en % en poids)
| | |
|---|---|
| C | 0,001 à 0,5 % |
| S | max. 0,008 % |
| N | 0,1 à 0,3 % |
| Cr | 24 à 28 % |
| Ni | 30 à 33 % |
| Mn | 1,0 à 2,0 % |
| Si | 0,005 à 0,2 % |
| Mo | 6,0 à 7,5 % |
| Ti | max. 0,05 % |
| Nb | max. 0,05 % |
| Cu | 0,8 à 2,0 % |
| P | max. 0,025 % |
| Al | max. 0,2 % |
| cérium MM | 0,01 à 0,1 % |
| W | max. 0,5 % |
| Co | max. 0,5 % |
| B | 0,001 à 0,05 % |
| Fe | étant le reste |
et des impuretés résultant de l'élaboration.

2. Feuille métallique selon la revendication 1, comprenant la composition chimique suivante (en % en poids)
| | |
|---|---|
| C | 0,001 à 0,02 % |
| S | max. 0,005 % |
| N | 0,15 à 0,25 % |
| Cr | 26 à 27,5 % |
| Ni | 31 à 32 % |
| Mn | 1,2 à <2,0 % |
| Si | 0,01 à < 0,1 % |
| Mo | 6,0 à 7,0 % |
| Ti | max. 0,05 % |
| Nb | max. 0,05 % |
| Cu | 1,0 à < 2,0 % |
| P | max. 0,02 % |
| Al | max. 0,15 % |
| cérium MM | 0,02 à < 0,1 % |
| W | max. 0,3 % |
| Co | max. 0,5 % |
| B | 0,001 à 0,01 % |
| Fe | étant le reste |
et des impuretés résultant de l'élaboration.

3. Procédé de fabrication d'une feuille métallique selon la revendication 1 ou la revendication 2, qui est traitée jusqu'à avoir une épaisseur finale de < 1,0 mm par formage à froid et/ou à chaud d'un produit semi-fini, le cas échéant, avec au moins un traitement thermique/de recuit.

4. Procédé selon la revendication 3, **caractérisé en ce qu'**on utilise des rouleaux, notamment des rouleaux en carbure, pour le formage mécanique destiné à produire des feuilles de < 1,0 mm.

5. Procédé selon la revendication 3 ou la revendication 4, **caractérisé en ce qu'**on utilise des rouleaux en carbure ayant une rugosité Ra de < 0,5 µm pour rouler les feuilles jusqu'à une épaisseur finale de 1,0 mm.

6. Procédé selon l'une des revendications 3 à 5, **caractérisé en ce qu'**on dégraisse les feuilles avec un mordant d'électrolyte avant un traitement de recuit.

7. Procédé selon l'une des revendications 3 à 6, **caractérisé en ce qu'**on utilise de l'huile de laminage au cours du processus de roulage jusqu'à l'épaisseur finale de < 1,0 mm, un film d'huile de laminage d'une épaisseur prédéterminable restant sur la surface de feuille à la fin du roulage.

8. Procédé selon l'une des revendications 3 à 7, **caractérisé en ce qu'**après le formage mécanique, la feuille est traitée thermiquement à une température comprise entre 500 et 1000°C, dans une atmosphère contenant de l'oxygène, pendant une période de 5 à 60 minutes.

9. Procédé selon l'une des revendications 3 à 8, **caractérisé en ce que** la feuille est traitée thermiquement dans un four à moufle à une température comprise entre 550 et 950°C, dans une atmosphère contenant de l'oxygène, pendant une période de 5 à 40 minutes.

10. Procédé selon l'une des revendications 3 à 9, **caractérisé en ce qu'**en fonction de l'épaisseur de la feuille et du type de traitement thermique, une couche d'oxyde ayant une épaisseur de couche définie peut être obtenue sur la surface de feuille.

11. Utilisation d'une feuille métallique selon l'une des revendications 1 à 10 en tant que catalyseur en métal massif destiné à la production d'hydrogène à partir d'une solution aqueuse en liaison active avec une source de lumière.

12. Utilisation d'une feuille métallique selon l'une des revendications 1 à 10 en tant que catalyseur en métal massif destiné à la production d'hydrogène à partir d'une solution aqueuse en liaison active avec des rayons du soleil.
